# EUROPEAN PATENT APPLICATION

(11) **EP 3 416 098 A1**
(43) Date of publication of application: **19.12.2018**
(21) Application number: 18176852.4
(22) Date of filing: 08.06.2018
(51) Int. Cl.: G06K 9/00, G06K 9/32

(54) **METHOD AND DEVICES TO OPTIMIZE MARKER MANAGEMENT FOR POSE ESTIMATION**

(30) Priority: 16.06.2017 EP 17305737
(71) Applicant: THOMSON LICENSING, 92130 Issy les Moulineaux (FR)
(72) Inventor: LAURENT, Anthony, 35576 Cesson-Sevigne (FR); JOUET, Pierrick, 35576 Cesson-Sevigne (FR); ROBERT, Philippe, 35576 Cesson-Sevigne (FR)
(74) Representative: Huchet, Anne

(57) **Abstract**

The present disclosure relates to methods, devices or systems for detecting markers spread in an environment to estimate the pose of a device running an augmented reality application. Detecting markers and playing the AR application are two competitor tasks for the device's processing resources. When the number of markers to detect requires a substantial part of the device's processing resources, it may penalize the application processing. The present disclosure proposes different embodiments to optimize the marker list to detect according to the required processing resources for both tasks.

## Description

### 1. Technical field

The present disclosure relates to the domain of detecting markers spread in an environment to estimate the pose of a device comprising a camera, especially when the number of markers to detect requires a substantial part of the device's processing resources.

### 2. Background

An augmented reality (AR) application integrates digital information into the user's environment in real time. The composite view is displayed in real-time using a specific AR device (tablet, phone, AR glasses). A typical application consists in inserting virtual three-dimension (3D) objects in the real environment. For this purpose, the AR application has to constantly estimate the pose of the AR device in space relatively to a priori known frames of reference. An AR device is equipped with a camera and search for markers in the images acquired by the camera. The common approach used in AR to position a virtual object is to use a two-dimension (2D) marker having a known pose in the environment, to estimate the pose of the device relatively to this marker and to position the virtual objects with respect to the marker. The 2D marker can be a synthetic image especially designed for tracking (e.g. fiducial markers like ARUCO markers), or any adequate image (textured enough with no regular pattern) previously learnt by the application. 3D objects can also be used as marker. An example of application addressed by such markers is to superimpose augmented reality features to a specific 3D object. These AR effects are carried out in the video currently captured by the AR device that the user is holding in front of the scene containing the objects of interest. For example, a 3D object may be distorted or object textures may be modified. These operations require characterization of these objects.

For a wide range of AR application, several markers spread evenly throughout the environment are necessary. Markers may be independent from each other, that is, each marker defines its own frame of reference in which an animation may be played regardless the other frames of reference, like in a museum AR application for example. Markers may also belong to a common wide frame of reference and mark a position within this frame of reference from location to location, like in an entertainment AR application that would take place in an entire room, in a building or even outside.

Playing an AR application is processing consuming for a device. Detecting markers is also processing consuming. The more markers have to be searched for in images acquired by the AR device's camera, the more processing resources are required. So, in an AR application, two processes are in competition for the processing resources of the device. Having numerous markers to detect may collapse the device performances to render the AR scene, depending on the AR device processing resources. Some devices can support the detection of a very limited number of markers whereas others can detect a larger number while keeping required processing resources to play the AR application.

A possibility to avoid this drawback is to judiciously place the markers in the environment in order to limit their number. This solution is not satisfying because, first, device localization and pose estimation is less precise and reliable, and second, it is not robust to changes of the environment. Indeed, markers' visibility may change if moving objects mask them (i.e. objects between the camera and the marker) or according to lighting conditions. Another possibility is to build a no-marker environment. Such an approach requires even more processing resources to perform computer vision in order to estimate the location and the pose of the device. SLAM technique (Simultaneous Localization And Mapping) aims at constructing or updating a map of an unknown environment while simultaneously keeping track of the device's location within it. SLAM does not aim at identifying specific objects (markers) within the environment. It is not adapted to AR applications in which animations are centered on markers which may eventually be moved (e.g. in a museum AR application in which each marker defines its own frame of reference regardless the others).

There is a lack of a solution for optimizing the set of markers to detect in order to minimize the required processing resources while ensuring a reliable pose estimation.

### 3. Summary

The purpose of the present disclosure is to overcome the lack of a method for optimizing the list of markers to detect in order to minimize the required processing resources while ensuring a reliable pose estimation for a system running an augmented reality application.

The present disclosure relates to a method of a method of detecting markers for a device. The method comprises:
- selecting a marker list in a marker set according to a location of the device and according to first data representative of marker detection performances of the device; said first data being associated with a marker of said marker set; the markers being selected to be in the neighborhood of said location and the list being ordered according to the first data;
- generating second data representative of marker detection performances while detection by the device of markers of the marker list; and
- updating the first data according to the second data.

According to an aspect of the present principles, selecting the marker list comprises:
- sending a request comprising a location of the device to a marker management module, the first data being stored in a memory associated with the marker management module; and
- receiving from the marker management module, in response to the request, the marker list computed according to the location of the device and the first data.

According to another aspect of the present principles, updating the first data comprises:
- sending the second data to a marker management module, the first data being stored in a memory associated with said marker management module; and
- modifying said memory according to the second data.

In an embodiment, updating said first data comprises:
- receiving from peer devices first data corresponding to marker detection performances of sending peer devices;
- updating first data stored in a local memory according to the received first data; and
- transmitting the updated first data to peer devices.

In an embodiment, the method further comprises estimating the pose of the device according to a detection of markers of the marker list.

The present disclosure also relates to a device configured to detect markers. The device comprises at least one memory associated with at least one processor configured to:
- select a marker list in a marker set according to a location of the device and according to first data representative of marker detection performances of the device; said first data being associated with a marker of said marker set; the markers being selected to be in the neighborhood of said location and the list being ordered according to the first data;
- generate second data representative of marker detection performances while detection by the device of markers of the marker list; and
- update the first data according to the second data.

In an embodiment, the device comprises a communication interface configured to select a marker list by:
- Sending a request comprising a location of the device to a marker management module, the first data being stored in a memory associated with the marker management module; and
- Receiving from the marker management module, in response to the request, the marker list selected according to the location of the device and the first data.

According to another aspect of the present principles, the device comprises a communication interface and updating the first data comprises:
- Sending the second data to a marker management module via the communication interface, the first data being stored in a memory associated with the marker management module; and
- Modifying the memory according to the second data.

According to another aspect of the present principles, the device comprises a communication interface and updating the first data comprises:
- receiving from peer devices first data corresponding to marker detection performances of sending peer devices via the communication interface;
- updating first data stored in a local memory according to the received first data; and
- transmitting the updated first data to peer devices via the communication interface.

In an embodiment, the at least one processor is configured to estimate a pose of the device according to a detection of markers of the marker list.

### 4. List of figures

The present disclosure will be better understood, and other specific features and advantages will emerge upon reading the following description, the description making reference to the annexed drawings wherein:
- **Figure 1** shows an environment (i.e. a real scene) comprising a fiducial marker and an AR device, according to a particular embodiment of the present principles;
- **Figure 2** illustrates a decomposition of an AR application in three modules, according to a particular embodiment of the present principles;
- **Figure 3** diagrammatically illustrates a first embodiment of the three modules of figure 2, where the three modules are implemented in a standalone device, according to a particular embodiment of the present principles;
- **Figure 4** diagrammatically illustrates a second embodiment of the three modules of figure 2, where the three modules are implemented in different devices connected to each other in a peer-to-peer mode, according to a particular embodiment of the present principles;
- **Figure 5** diagrammatically illustrates a third embodiment of the three modules of figure 2 based on a client-server model, according to a particular embodiment of the present principles;
- **Figure 6** diagrammatically shows an embodiment of a method as implemented in a processing device such as the devices of figures 3, 4 or 5 according to a non-restrictive advantageous embodiment;
- **Figure 7** shows an exemplary architecture of a device 70 which may be configured to implement a method described in relation to figure 6 according to one of the embodiments described in relation to figures 3 to 5 according to a non-restrictive embodiment.

### 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It is understood that subject matter embodiments can be practiced without these specific details.

According to a non-limitative embodiment of the present disclosure, a system gathering a method and devices to detect markers (e.g. 2D fiducial markers) for an Augmented Reality application according to available processing resources of the device running the application and required processing resources for markers detection on the one hand and for the AR application on the other hand.

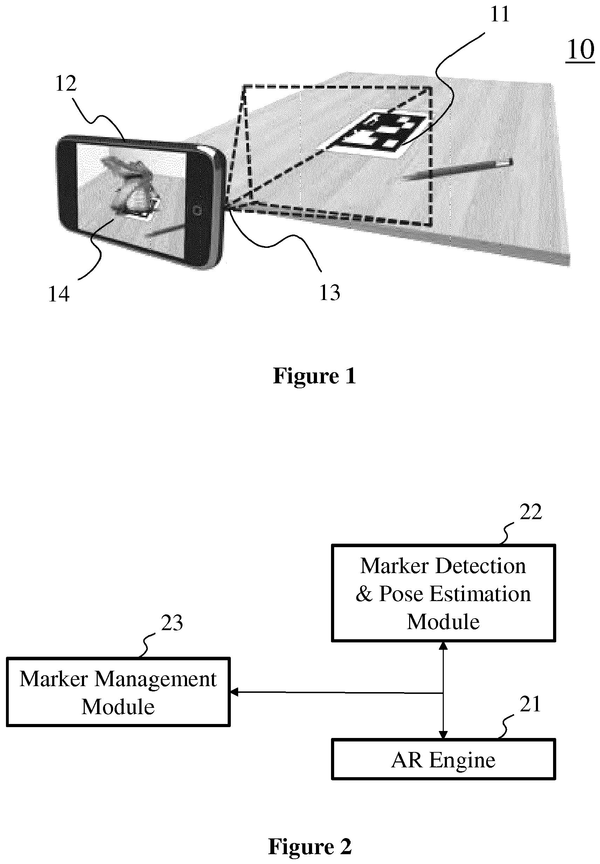

**Figure 1** shows an environment (i.e. a real scene) comprising a fiducial marker 11 and an AR device 12. The environment also comprises a table on which the marker lies aside to a pencil. The camera 13 of the AR device 12 is capturing images of the scene. While running, the AR application processes captured images in order to detect the presence of known markers, their location and orientation according to the camera. According to these data, the AR application computes the reciprocal pose (i.e. location and orientation) of the camera in a frame of reference defined according to detected markers. In the example of figure 1, there is only one two-dimension fiducial marker which is the center of the frame of reference. If the user rotates or moves the device 12, the marker is no longer within the field of view of the camera 13. So, in order to continue the AR experience, other markers may be spread in the environment. Markers may be surfaces textured with no regular pattern or even three-dimension objects. Specific data for marker recognition and detection in captured images are stored a memory handled by the AR application. Advantageously, this memory is an element of the AR device 12. The AR device 12 comprises at least one screen 14 on which are rendered the captured images in which have been integrated virtual objects according to the estimated pose of the AR device according to detected markers. On the example of figure 1, a virtual three-dimension character is added at the center of the frame of reference. In the example of figure 1, this center corresponds to the detected fiducial marker. The detection of the marker is key in the AR application as the character has to seem to walk on the table for instance. If the pose of the AR device is approximated relatively to the marker, the character will for instance fly over the table or be inserted in the table contrarily to what is wanted for this example application. Ensuring good running conditions for the marker detection and pose estimation module of the AR application is then central. According to the example of figure 1, the AR device 12 is a smartphone. In other embodiments, the AR device may be a tablet or a Head Mounted Display (HMD) device equipped with a front view camera for instance.

**Figure 2** illustrates a decomposition of an AR application in three modules according to a particular embodiment of the present principles. The Augmented Reality Engine (ARE) 21 is a module which ensures the computing and rendering of the virtual objects, integrates them in images captured by the camera 13 of the AR device 12 of figure 1, for example, and renders them on the screen 14 of the AR device. This module requires a precise and robust estimation of the AR device pose according to at least one marker in order to be able to reliably run the AR experience.

A Marker Detection and Pose Estimation module (MD & PE) 22 is in charge of determining a selection of markers and estimating the pose of the device according the frames of reference associated with the selected and detected markers. The MD & PE module is in charge of, first, selecting a subset of markers within a list of markers potentially visible from the location of the AR device, and second, detecting markers of this subset of markers in the upcoming images captured by the camera of the AR device. Once a subset of markers is selected, the detection process is performed according to techniques known from a person skilled in the art and according to data stored in a memory associated with the MD & PE module. Markers to be detected may be two-dimension markers, for example fiducial markers, textured surfaces or, for instance, three-dimension objects of the environment targeted as markers.

The list of markers potentially visible from the location of the AR device is provided by a Marker Management (MM) module 23. The MD&PE module sends a request for a list of markers to the MM module. Data relative to the set of every known marker of the environment are stored in a memory associated with the MM module 23. This set of markers may evaluate according to the AR application; new markers may be added and some may be removed from the set. Data associated with a marker of the set of markers comprise the following information:
- a unique marker identifier;
- Detection information data such as the type of detection method of the marker (ARUCO, Vuforia, 3D detection...) and data which are specific to the detection method (e.g. the ID for ARUCO, databases for Vuforia, 3D model for a 3D marker...). They may be completed with data, for example statistical data, about the resources required to detect the marker (e.g. memory and processing resources);
- A location according to the application. The location format depends on the way the MD&PE module locates the AR device in the environment. In an outdoor environment, location data may be GPS coordinates. In an indoor environment, location may be expressed as an identifier associated with a room or part of a room. Location information is used by the MM module to select markers in the AR device's neighborhood, and so potentially visible by the camera 13 of the AR device 12, and to discard markers that are not visible from this location. Preferably, the notion of neighborhood means that the marker is potentially detectable by the AR device from the actual location of the AR device. Are excluded from the neighborhood, markers which are not detectable from the actual location of the AR device with a high level of confidence, for example over 80% or 90% of confidence;
- A hierarchy information according to the application. Markers may be organized in a hierarchical way according to their role and their importance in the AR application. As markers may be still or moving, as markers may refer to a frame of reference defined according to another marker, as AR animations may be attached to a marker, markers do not play the same role in the application. Data representative of this hierarchical relationship may be useful to select the list of markers for the MD&PE module;
- Marker detection performance (MDP) data which are representative of how easily detectable the marker is. This information is computed from feedback data provided by the MD&PE module of the AR device 12. In a variant, marker detection performance data are computing according to the feedback data from a plurality of MD&PE modules of different AR devices running the AR application, according to different embodiments described in detail below. Marker detection performance data are updated by MM module when new feedback data are received. MDP data are used to select and order markers in a list of markers to send to a MD&PE module in response of a request. For example, the marker list may include only markers with a score relative to detection performances over a threshold, the better the detection performances, the higher the score; the list sorted in descending order by the score.

In figures 2 to 6, the modules are functional units, which may or may not be in relation to distinguishable physical units. For example, these modules or some of them may be brought together in a unique component or circuit, or contribute to functionalities of a software. A contrario, some modules may potentially be composed of separate physical entities. The apparatus which are compatible with the disclosure are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

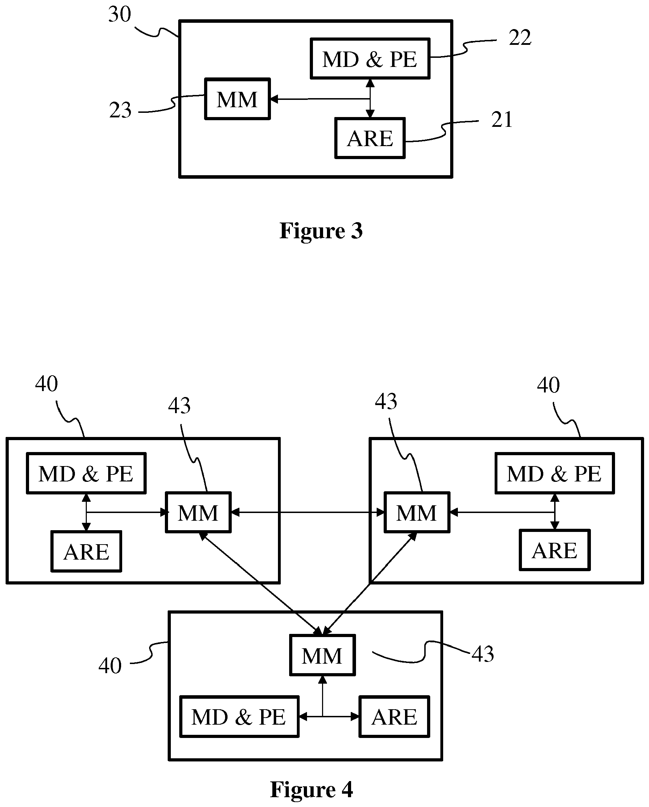

**Figure 3** diagrammatically illustrates a first embodiment of the three modules of figure 2, where the three modules are implemented in a standalone device 30. In this example embodiment, the AR device (e.g. a tablet, a smartphone or a HMD equipped with a front camera) runs the AR application in the environment. In order to render the virtual objects over the images captured by the camera of the device, the Augmented Reality Engine 21 requires a robust estimation of the pose of the AR device according to at least one marker in the environment from the Marker Detection and Pose Estimation module 22. First, the MD&PE module 22 requests a list of markers potentially visible according to the location of the device from the Marker Management module 23. The marker list may be requested only when the MD&PE module 22 detects that the device enters a new location. In a variant, an update of the marker list is periodically requested, for instance every second or every five seconds. In another variant, the MD&PE module requests an update of the list when a modification in markers detection is observed, for example, when no marker of the list is detected, or when a detected marker gets out of the field of view of the camera or, more generally when a detected marker is no longer detected or when necessary memory and/or processing resources for its detection vary over a threshold. The MD&PE module processes the images captured by the camera of the AR device 30 to detect markers of the list provided by the MM module 23 and monitors whether a marker of the list is detected and, if yes, memory and processing resources used for its detection. The MD&PE module 22 estimates the pose of the AR device 30 according to detected markers and transmits this pose to the ARE 21. Parallelly, the MD&PE module 22 feedbacks the MM module 23 with the monitored data while detecting markers of the list.

As described referring Figure 2, data relative to the set of every known marker of the environment are stored in a memory associated with the MM module 23. On a request from the MD&PE module 22, the MM module 23 builds a list of markers potentially visible from a location indicated in the request. Markers of this list are ordered according to the data representative of marker detection performances. When receiving monitoring feedback from the MD&PE module 22, the MM module 23 updates these data in its associated memory. As a consequence, a next request from the MD&PE module will get, in response, a list of markers selected and ordered according to the updated detection performance data. In the example embodiment of figure 3, the device 30 is standalone. Marker data in the memory associated with the MM module 23 are set and updated according to the activity of the MD&PE module 22 of the AR device 30.

**Figure 4** diagrammatically illustrates a second embodiment of the three modules of figure 2, where the three modules are implemented in different devices 40 connected to each other in a peer-to-peer mode. ARE module and MD&PE module of an AR device 40 are similar to ARE 21 and MD&PE module 22 of figures 2 and 3. Marker Management module 43 builds marker lists upon request of the MD&PE module of its device and collects marker detection performance data from the MD&PE module like MM module 23. In addition, a MM module 43 of an AR device 40 shares its marker data with the MM modules 43 of other AR devices 40. In other words, MM modules 43 comprise a communication interface, e.g. a wireline interface (for example a bus interface, a wide area network interface, a local area network interface) or a wireless interface (such as a IEEE 802.11 interface or a Bluetooth® interface). Through this communication interface, MM modules 43 receive data from other MM modules 43 as they receive feedback data from their associated MD&PE module. A MM module 43 updates its own MDP data, on the one hand, according to the monitored feedback MDP data from its associated MD&PE module 22 and, on the other hand, according to received MDP data from other MM modules 43.

A MM module 43 keeps a list of connectable peers in a memory associated with the device 40 that the MM module 43 is implemented in. This list is kept updated according to well-known means related to the type of the communication device (e.g. WiFi or Bluetooth®). A MM module 43 sends feedback data to connectable peers when feedback data are received from the associated MD&PE module. In a variant, a MM module 43 sends feedback data to connectable peers when a significant variation or change is detected within performance data, for example when performance data associated with a marker suddenly decrease over a predetermined percentage (e.g. 50% or 75%) or when a marker which has not been detected for a period is detected.

A MM module 43 receives feedback data from peer MM modules 43 implemented in different devices 40. Devices 40 do not have same processing resources. Feedback data sent and received by peer MM modules comprise information about Marker Detection Performance (MDP) and information about processing resources of the associated device 40. Remote MDP are merged with local MDP according to processing resources of both devices 40, the remote one and the local one. A first device 40 with more processing resources than a second device 40 adapts feedback data received from the second device according to the difference between their processing resources to merge these data with its own MDP.

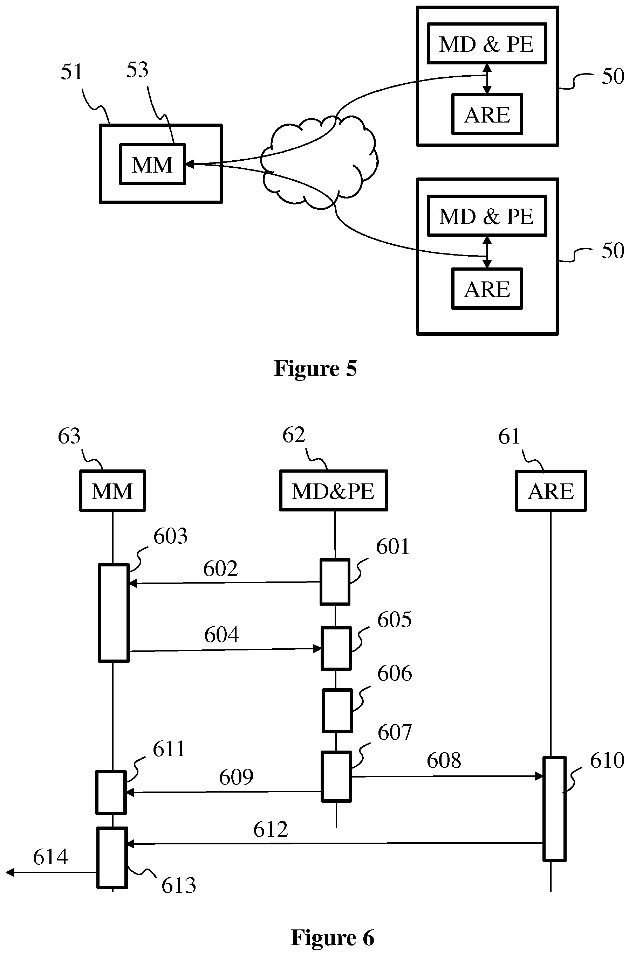

**Figure 5** diagrammatically illustrates a third embodiment of the three modules of figure 2 based on a client-server model. In this example embodiment, MD&PE module and ARE of figure 2 are implemented in augmented reality devices 50. Devices 50 do not comprise a MM module. A server device 51 implements a MM module 53 shared by every client device 50. MD&PE module of devices 50 and the MM module of the server device 51 comprise a communication interface, e.g. a wireline interface (for example a bus interface, a wide area network interface, a local area network interface) or a wireless interface (such as a IEEE 802.11 interface or a Bluetooth® interface). MD&PE modules send requests of ordered marker lists to the MM module 53 through their communication interface. As in the peer-to-peer embodiment of figure 4, feedback data sent by MD&PE modules to the MM module 53 gather MDP and processing resources information of the sending client device 50. In a variant, feedback data do not comprise processing resources information, the server device 51 storing processing resources information of every client device 50 in a local memory. The MM module of the server device 51 stores and merge MDP data according to associated processing resources. When receiving a request from a MD&PE module, MM module 53 builds a marker list according to marker detection performances data associated with the location provided in the request and according to processing resources of the device 50 requesting the list.

**Figure 6** diagrammatically shows an embodiment of a method 600 as implemented in a processing device such as the devices of figures 3, 4 or 5 according to a non-restrictive advantageous embodiment. Three modules, for example structured as one of the embodiment of figures 3, 4 or 5, implement the steps of the method and exchange messages. An Augmented Reality application starts running on a AR device. The application requires a robust pose estimation of the device. The pose of the device is estimated in reference to markers placed in its nearby environment.

In a step 601, a Marker Detection and Pose Estimation module 62 detects the location of the device in the environment. The location is more a neighbourhood than precise spatial coordinates. In an outdoor environment, location data may be GPS coordinates. In an indoor environment, location may be expressed as an identifier associated with a room or part of a room. At step 601, the MD&PE module sends a message 602 to a Marker Manager module 63, requesting a marker list according to the detected location.

In a step 603, the MM module 63, in response to a message 602 from a MD&PE module 62, builds a marker list. A set of markers associated with data as described in relation to figure 1 are stored in a memory associated with the MM module. The MM module 62 built an ordered list of markers potentially visible from the location and processing resources of the device implementing the requesting MD&PE module. Processing resources information may be part of the message 602. In a variant, processing resources information of devices implementing a MD&PE module for the AR application are stored in the memory associated with the MM module 63. The marker list may be ordered, for example, according to marker detection data associated with each marker in the memory. The ordered marker list is sent in a message 604 to the requesting MD&PE module 62 as a response to the request 602.

In a step 605, the MD&PE module 62 receives an ordered marker list. In the consecutive step 606 the MD&PE module 62 performs detection of markers of the received list in images captured by the camera associated with the device. Different algorithms may be used according to the type of each marker to detect. While detecting markers, the MD&PE module monitors marker detection performance information for each marker of the list. If no marker is detected during step 605, a new request 602 is sent the MM module to get a new marker list. The MD&PE module may set a flag in the request 602 to indicate that this is a new request in order to get different markers.

In a step 607, the pose of the device implementing the MD&PE module is estimated according to detected markers. Module 62 sends a message 608 to an Augmented Reality Engine 61 comprising the pose estimation. Module 60 sends a message 609 to the MM module 63, the message 609 comprising feedback data about marker detection performances monitored during step 606.

In a step 610, the Augmented Reality Engine 61 uses the pose estimation received with message 608 to run the AR application. ARE 61 is processing resources consuming. This consumption varies over the time according to the application needs. ARE 61 may send a message 612 to MM module 63, message 612 comprising data representative of the currently used processing resources. In a variant, message 612 is also sent to MD&PE module 62 which, in step 607, adds these data to message 609 to MM module 62.

In a step 611, MM module 63 merges feedback data received via message 609 with marker data stored in the memory associated with module 63. For markers in the list, the merging of new Marker Detection Performance data (MDP) with stored MDP data for a given marker is performed according the processing resources of the device implementing ARE 61 and MD&PE module 62. Average processing resources of a device may be stored in the memory associated with module 63 and may be updated when receiving a message 612 from ARE 61. In a variant, processing resources are comprised in message 609.

In a step 613, MM module 63 may share marker data stored in its associated memory with remote MM modules by sending a message 614 to peer MM modules, even for MM module 53 of figure 5.

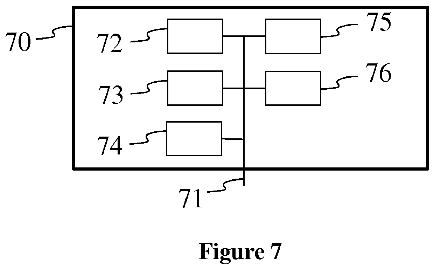

**Figure 7** shows an exemplary architecture of a device 70 which may be configured to implement a method described in relation to figure 6 according to one of the embodiments described in relation to figures 3 to 5.

The device 70 comprises following elements that are linked together by a data and address bus 71:
- a microprocessor 72 (or CPU), which is, for example, a DSP (or Digital Signal Processor);
- a ROM (or Read Only Memory) 73;
- a RAM (or Random Access Memory) 74;
- a storage interface 75;
- an I/O interface 76 for reception of data to transmit, from an application; and
- a power supply, e.g. a battery.

In accordance with an example, the power supply is external to the device. In each of mentioned memory, the word « register » used in the specification can correspond to area of small capacity (some bits) or to very large area (e.g. a whole program or large amount of received or decoded data). The ROM 73 comprises at least a program and parameters. The ROM 73 may store algorithms and instructions to perform techniques in accordance with present principles. When switched on, the CPU 72 uploads the program in the RAM and executes the corresponding instructions.

The RAM 74 comprises, in a register, the program executed by the CPU 72 and uploaded after switch on of the device 70, input data in a register, intermediate data in different states of the method in a register, and other variables used for the execution of the method in a register.

In accordance with examples, the device 70 is configured to implement a method described in relation to figure 6, and belongs to a set comprising:
- a mobile device;
- a game device;
- a tablet (or tablet computer);
- a laptop;
- a server (e.g. a web server).

Naturally, the present disclosure is not limited to the embodiments previously described.

In particular, the present disclosure is not limited to a method for managing the markers of an augmented reality application to enhance pose estimation but also extends to methods for managing markers of a virtual reality application or to methods for optimizing distribution of AR or VR markers over an environment and to any device implementing these methods. The implementation of calculations necessary to implements these methods is not limited either to an implementation in shader type microprograms but also extends to an implementation in any program type, for example programs that can be executed by a CPU type microprocessor. The use of the methods of the present disclosure is not limited to a live utilisation but also extends to any other utilisation, for example for processing known as postproduction processing in a recording studio.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of detecting markers for a device, the method comprising:
- selecting a marker list in a marker set according to a location of the device and according to first data representative of marker detection performances of said device; said first data being associated with a marker of said marker set; the markers being selected to be in the neighborhood of said location and the list being ordered according to the first data;
- generating second data representative of marker detection performances while detection by said device of markers of said marker list; and
- updating said first data according to said second data.

2. The method of claim 1 wherein selecting a marker list comprises:
- sending a request comprising a location of the device to a marker management module, the first data being stored in a memory associated with said marker management module; and
- receiving from said marker management module, in response to said request, the marker list computed according to said location of the device and said first data.

3. The method of claim 1 wherein updating said first data comprises:
- sending said second data to a marker management module, the first data being stored in a memory associated with said marker management module; and
- modifying said memory according to the second data.

4. The method of claim 1 wherein updating said first data comprises:
- receiving from peer devices first data corresponding to marker detection performances of sending peer devices;
- updating first data stored in a local memory according to the received first data; and
- transmitting the updated first data to peer devices.

5. The method of one of the claims 1 to 4 further comprising estimating a pose of said device according to a detection of markers of the marker list.

6. A device configured to detect markers, the device comprising at least one memory associated with at least one processor configured to:
- select a marker list in a marker set according to a location of the device and according to first data representative of marker detection performances of said device; said first data being associated with a marker of said marker set; the markers being selected to be in the neighborhood of said location and the list being ordered according to the first data;
- generate second data representative of marker detection performances while detection by said device of markers of said marker list; and
- update said first data according to said second data.

7. The device of claim 6 wherein the device further comprises a communication interface configured to select a marker list by:
- sending a request comprising a location of the device to a marker management module, the first data being stored in a memory associated with said marker management module; and
- receiving from said marker management module, in response to said request, the marker list selected according to said location of the device and said first data.

8. The device of claim 6 wherein the device further comprises a communication interface and wherein updating said first data comprises:
- sending said second data to a marker management module via the communication interface, the first data being stored in a memory associated with said marker management module; and
- modifying said memory according to the second data.

9. The device of claim 6 wherein the device further comprises a communication interface and wherein updating said first data comprises:
- receiving from peer devices first data corresponding to marker detection performances of sending peer devices via said communication interface;
- updating first data stored in a local memory according to the received first data; and
- transmitting the updated first data to peer devices via said communication interface.

10. The device of one of the claims 6 to 9 wherein said at least one processor is further configured to estimate a pose of said device according to a detection of markers of the marker list.
